# EUROPEAN PATENT APPLICATION

(11) **EP 4 841 704 A1**
(43) Date of publication of application: **18.11.2026**
(21) Application number: 26178786.5
(22) Date of filing: 14.05.2026
(51) Int. Cl.: H01M 4/36, H01M 4/58, H01M 4/525, H01M 10/0525

(54) **COMPOSITE POSITIVE ELECTRODE ACTIVE MATERIAL, METHODS OF PREPARING COMPOSITE POSITIVE ELECTRODE ACTIVE MATERIALS, AND RECHARGEABLE LITHIUM BATTERIES**

(30) Priority: 14.05.2025 KR 20250062703; 13.05.2026 KR 20260086463
(71) Applicant: SAMSUNG SDI CO., LTD., Yongin-si, Gyeonggi-do 17084 (KR)
(72) Inventor: KIM, Young-Ki, 17084 Yongin-si (KR); KIM, Sangmi, 17084 Yongin-si (KR); KANG, Minchul, 17084 Yongin-si (KR); DOO, Sungwook, 17084 Yongin-si (KR); KANG, Gwiwoon, 17084 Yongin-si (KR); LEE, Soonrewl, 17084 Yongin-si (KR)
(74) Representative: Maiwald GmbH

(57) **Abstract**

A composite positive electrode active material according to some embodiments of the present disclosure includes a first positive electrode active material in a form of a plurality of primary particles including a lithium iron phosphate-based compound and a second positive electrode active material in a form of a plurality of primary particles including a lithium cobalt-based composite oxide. The composite positive electrode active material may have a particle form including the plurality of primary particles of the first positive electrode active material and the plurality of primary particles of the second positive electrode active material.

## Description

### BACKGROUND

### 1. Field

The present disclosure relates to composite positive electrode active materials, methods of preparing the same, and rechargeable lithium batteries.

### 2. Description of the Related Art

A portable information device (such as a cell phone, a laptop, or smart phone) or an electric vehicle has used a rechargeable lithium battery having high energy density as a driving power source. Recently, research has been actively conducted to use a rechargeable lithium battery with high energy density as a driving power source for hybrid or electric vehicles or power storage source.

A lithium cobalt-based composite oxide such as lithium cobalt oxide (LiCoO₂), a lithium nickel-based composite oxide such as lithium nickel-cobalt-manganese oxide (NCM), and a lithium nickel-cobalt-aluminum oxide (NCA), and a lithium iron phosphate-based compound are used as positive electrode active materials for rechargeable lithium batteries. Among them, the low-cost lithium iron phosphate-based compound, which uses iron (Fe) (which is relatively inexpensive) as the main component, is attracting attention due to the high prices of nickel (Ni) and cobalt (Co).

The lithium iron phosphate-based compound has an olivine structure and, thus, has superior cycle-life characteristics compared to other positive electrode active materials. However, when used at high voltage, the cycle-life characteristics deteriorate, which limits the voltage of use of the rechargeable lithium battery.

To this end, by mixing lithium cobalt-based composite oxide, high energy density may be achieved for the rechargeable lithium battery. Further, the battery may be used at high voltages, and high capacity may be achieved for the rechargeable lithium battery. However, there is a problem in that the discharge capacity at low temperatures (e.g., - 20°C) decreases and cycle-life characteristics of the rechargeable lithium battery are inferior.

### SUMMARY

The present disclosure provides a composite positive electrode active material, a method of preparing the composite positive electrode active material, and a rechargeable lithium battery, which secures price competitiveness while improving initial charge/discharge capacity and efficiency, improving discharge capacity and cycle-life characteristics at low temperatures, improving powder characteristics to increase pellet density, and improving capacity per volume and positive electrode utilization rate of the rechargeable lithium battery.

A composite positive electrode active material according to some embodiments of the present disclosure includes a first positive electrode active material in a form of a plurality of primary particles including a lithium iron phosphate-based compound and a second positive electrode active material in a form of a plurality of primary particles including a lithium cobalt-based composite oxide. The composite positive electrode active material may have a particle form including the plurality of primary particles of the first positive electrode active material and the plurality of primary particles of the second positive electrode active material.

In some embodiments, the lithium iron phosphate-based compound may include a compound represented by Chemical Formula 1, a compound represented by Chemical Formula 2, or a combination thereof:

[Chemical Formula 1] Liₐ₁Fe₍₁₋ₓ₁₎M¹ₓ₁PO₄,

where 0.9≤a1≤1.5 and 0≤x1≤0.4. M¹ may be Al, Ca, Ce, Cr, Cu, La, Mg, Mn, Mo, Nb, Ni, Sn, Sr, Ti, V, W, Y, Zn, Zr, or a combination thereof.

[Chemical Formula 2] Liₐ₂Mnₓ₂Fe_{(1-x2-y2)}M²_{y2}PO₄,

where 0.9≤a2≤1.5, 0.1≤x2≤0.9, 0≤y2<0.9, and x2+y2<1. M² may be Al, Ca, Ce, Cr, Cu, La, Mg, Mo, Nb, Ni, Sn, Sr, Ti, V, W, Y, Zn, Zr, or a combination thereof.

In some embodiments, the lithium iron phosphate-based compound may include Al, Mg, Ti, or V in an amount from about 0.1 mol% to about 0.5 mol% based on a total metal of the lithium iron phosphate-based compound, excluding lithium.

In some embodiments, an average particle diameter of the primary particles of the first positive electrode active material may be greater than or equal to about 0.1 µm and less than about 2 µm. An arithmetic mean size of the primary particles of the first positive electrode active material may be less than or equal to about 200 nm. A standard deviation of the arithmetic mean size of the primary particles of the first positive electrode active material may be less than or equal to about 100 nm.

In some embodiments, the lithium cobalt-based composite oxide may be represented by:

Liₐ₃Coₓ₃M³ _{y3}O_{2-b3}X_{b3},

where 0.9≤a3≤1.8, 0.7≤x3≤1, 0≤y3≤0.3, 0.9≤x3+y3≤1.1, and 0≤b3≤0.1. M³ may be Al, B, Ba, Ca, Ce, Cr, Cu, Fe, Mg, Mn, Mo, Ni, Se, Si, Sn, Sr, Ti, V, W, Y, Zn, Zr, or a combination thereof. X may be F, P, S, or a combination thereof.

In some embodiments, the lithium cobalt-based composite oxide may be doped with aluminum. An amount of aluminum in the lithium cobalt-based composite oxide may be from about 0.05 wt% to about 1 wt% based on 100 wt% of the lithium cobalt-based composite oxide.

In some embodiments, an average particle diameter of the primary particles of the second positive electrode active material may be from about 2 µm to about 8 µm.

In some embodiments, the second positive electrode active material may further include a coating layer disposed on surfaces of the primary particles, the coating layer including aluminum or titanium.

In some embodiments, the composite positive electrode active material may be in a form of a plurality of secondary particles, and an average particle diameter of the secondary particles of the composite positive electrode active material may be from about 3 µm to about 20 µm.

In some embodiments, the composite positive electrode active material may include the first positive electrode active material in an amount from about 50 wt% to about 99 wt% based on 100 wt% of the composite positive electrode active material. The composite positive electrode active material may include the second positive electrode active material in an amount from about 1 wt% to about 50 wt% based on 100 wt% of the composite positive electrode active material.

In some embodiments, a number of primary particles of the second positive electrode active material in particle of the composite positive electrode active material may be 10 or less.

In some embodiments, particles of the composite positive electrode active material may include pores, and a porosity, represented by a ratio of an area occupied by the pores to a cross-sectional area of the particles of the composite positive electrode active material, may be from about 10% to about 50%.

In some embodiments, a pellet density of the composite positive electrode active material ranges from about 2.6 g/cc to about 3.4 g/cc.

A method of preparing a composite positive electrode active material according to some embodiments of the present disclosure may include preparing a first positive electrode active material in a form of primary particles including a lithium iron phosphate-based compound; mixing and wet milling the first positive electrode active material and a second positive electrode active material, having a form of primary particles and including a lithium cobalt-based composite oxide, to prepare a first slurry; and adding the first slurry into a spray dryer and spray drying the first slurry to prepare a first dried product.

In some embodiments, after preparing the first dried product, the method may further include firing the first dried product to prepare a first fired product.

A rechargeable lithium battery according to some embodiments of the present disclosure may include a positive electrode, a negative electrode, and an electrolyte. The positive electrode may include a positive electrode current collector and a positive electrode active material layer disposed on the positive electrode current collector and including the composite positive electrode active material as described above.

The composite positive electrode active material according to some embodiments may secure price competitiveness while improving initial charge/discharge capacity and efficiency, improving discharge capacity and cycle-life characteristics at low temperatures, improving powder characteristics to increase pellet density, and improving capacity per volume and positive electrode utilization rate of the rechargeable lithium battery.

### BRIEF DESCRIPTION OF THE DRAWINGS

FIG. 1 is a schematic perspective view showing a portion of a cylindrical rechargeable lithium battery according to some embodiments of the present disclosure.
FIG. 2 is a cross-sectional view schematically showing a prismatic rechargeable lithium battery according to some embodiments of the present disclosure.
FIGS. 3 and 4 are each a schematic exploded perspective view of a pouch-type rechargeable lithium battery.
FIG. 5 is a scanning electron microscope photograph of a cross-section of the composite positive electrode active material prepared in Example 1.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe embodiments, and is not intended to limit the present invention. The singular expression includes the plural expression unless the context clearly dictates otherwise.

The term "combination thereof" refers to a mixture, a laminate, a composite, a copolymer, an alloy, a blend, or a reaction product of the constituents.

Terms such as "comprises," "includes," or "have" are intended to designate the presence of an embodied feature, number, step, element, or a combination thereof, but those terms do not preclude the possibility of the presence or addition of one or more other features, number, step, element, or a combination thereof.

In the drawings, the thickness of layers, films, panels, or regions are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a geometry formed on the whole surface when viewed from a plan view, but also a geometry formed on a partial surface.

The average particle diameter may be measured, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. When a definition is not otherwise provided, the average particle diameter D₅₀ may mean a diameter of particles having a cumulative volume of 50 vol% in the particle size distribution, wherein the particles are assumed to be spherical. When a definition is not otherwise provided, the average particle diameter refers to a value obtained by measuring the sizes of 20 randomly selected particles from a scanning electron microscope (SEM) image and calculating an arithmetic mean of the sizes of 20 randomly selected particles, wherein the size of each particle is defined as a diameter in the case of a spherical particle, and as a square root of a product of a major axis length and a minor axis length in the case of a non-spherical particle.

The word "or" is not to be construed as an exclusive meaning, for example, "A or B" is construed to include A, B, or A+B.

"Metal" is interpreted as a concept including ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

As used herein, the term "vacuum" refers to a pressure in the range of 0.1 mbar to 10 mbar, as measured in the treatment chamber using a vacuum gauge.

As used herein, the term "primary particle" refers to a minimum unit particle that is recognized as a single particle agglomerate when a positive electrode active material is observed using a scanning electron microscope (SEM), in which a grain boundary is not clearly distinguishable or is not substantially observed. A primary particle is a basic unit constituting a secondary particle formed by aggregation of tens to hundreds of particles, and may exist alone or in a state in which a small number (for example, 20 or less) of primary particles are in contact with each other.

As used herein, the term "secondary particle" refers to an agglomerate of primary particles of a given material, and may also be referred to as an assembly in the present disclosure. A secondary particle has a structure in which the primary particles are combined into a single particle form through interparticle contact and bonding, rather than being simply physically mixed. A secondary particle may be recognized as a single particle form in which a plurality of primary particles are aggregated when observed using a scanning electron microscope (SEM). Such a secondary particle is distinguished from a simple mixture in which respective particles are independently dispersed. A secondary particle may be formed by a spray-drying process, or the like.

### Composite Positive Electrode Active Material

A composite positive electrode active material according to some embodiments includes a first positive electrode active material in a form of primary particles including a lithium iron phosphate-based compound and a second positive electrode active material in a form of primary particles including a lithium cobalt-based composite oxide. The composite positive electrode active material has a particle form including a plurality of primary particles of the first positive electrode active material and a plurality of primary particles of the second positive electrode active material.

The lithium iron phosphate-based compound that has excellent structural stability, high heat resistance, and price competitiveness is attracting attention. However, although the lithium iron phosphate-based compound provides excellent cycle-life characteristics, cycle-life characteristics of the lithium iron phosphate-based compound deteriorate when used at high voltages, so usable voltage of the lithium iron phosphate-based compound is limited.

There have been attempts to use a simple mixture of lithium cobalt-based composite oxides to achieve high capacity. High energy density may be achieved, use may be at high voltages, and high capacity may be achieved for a rechargeable lithium battery, but the discharge capacity at low temperatures (e.g., -20°C) decreases and cycle-life characteristics may be inferior.

A composite positive electrode active material according to some embodiments includes a lithium iron phosphate-based compound to secure price competitiveness, and includes a lithium cobalt-based composite oxide to enable implementation of high energy density, use at high voltage, and high capacity, but the composite positive electrode active material has a particle form including primary particles of the lithium iron phosphate-based compound and primary particles of the lithium cobalt-based composite oxide. The particle form including primary particles and primary particles may be, specifically, a single secondary particle form in which the primary particles of the lithium iron phosphate-based compound and the primary particles of the lithium cobalt-based composite oxide are agglomerated, and more specifically, an assembly form, so that low-temperature discharge capacity and cycle-life characteristics may be further improved for the rechargeable lithium battery.

### First Positive Electrode Active Material

The first positive electrode active material includes a lithium iron phosphate-based compound. The composite positive electrode active material may secure price competitiveness while also having excellent structural stability and thermal stability by including a lithium iron phosphate-based compound as the first positive electrode active material.

The lithium iron phosphate-based compound may include, for example, a compound represented by Chemical Formula 1, a compound represented by Chemical Formula 2, or a combination thereof. Chemical Formula 1 is as follows:

[Chemical Formula 1] Liₐ₁Fe₍₁₋ₓ₁₎M¹ₓ₁PO₄.

In Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof. Further, 0.90≤a1≤1.5, for example, 0.90≤a1≤1.2, or 0.95≤a1≤1.1. In addition, 0≤x1≤0.4, 0≤x1≤0.3, 0≤x1≤0.2, 0≤x1≤0.1 or 0.001≤x1≤0.05.

Chemical Formula 2 is as follows:

[Chemical Formula 2] Liₐ₂Mnₓ₂Fe_{(1-x2-y2)}M²_{y2}PO₄.

In Chemical Formula 2, 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof. Further, 0.90≤a2≤1.5, for example, 0.90≤a2≤1.2, or 0.95≤a2≤1.1. In addition, 0.1≤x2≤0.9, 0.3≤x2≤0.9, or 0.4≤x2≤0.8, and 0≤y2≤0.4, 0≤y2≤0.3, 0≤y2≤0.2, 0≤y2≤0.1, or 0≤y2≤0.05.

The lithium iron phosphate-based compound may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof, but the lithium iron phosphate-based compound is not limited thereto.

The lithium iron phosphate-based compound may include Al, Mg, Ti, V, or a combination thereof as a type of doping element, and Al, Mg, Ti, V, or combination thereof may be included in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, in which case the rate characteristics and cycle-life characteristics may be improved for the rechargeable lithium battery.

The lithium iron phosphate-based compound may include Ti, Al, or a combination thereof as a doping element, and an amount of Ti may be from about 0.1 mol% to about 0.5 mol%, from about 0.2 mol% to about 0.5 mol%, from about 0.3 mol% to about 0.5 mol%, or about 0.4 mol%, based on a total metal, excluding lithium, and an amount of Al may be from about 0.1 mol% to about 0.5 mol% based on a total metal, excluding lithium. The rate characteristics and cycle-life characteristics may be improved for the rechargeable lithium battery.

M¹ of Chemical Formula 1 and M² of Chemical Formula 2 may include Al, Mg, Ti, V, or a combination thereof, in which case cycle-life characteristics of the lithium iron phosphate-based positive electrode active material may be improved for the rechargeable lithium battery. In Chemical Formulas 1 and 2, Al, Mg, Ti, V, or a combination thereof may be included in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, and cycle-life characteristics of the lithium iron phosphate-based positive electrode active material may be improved for the rechargeable lithium battery. In Chemical Formula 1, 0.001≤x1≤0.005, 0.002≤x1≤0.005, 0.003≤x1≤0.005, or x1=0.004, and, in Chemical Formula 2, 0.001≤x2≤0.005, 0.002≤x2≤0.005, 0.003≤x2≤0.005, or x2=0.004, in which case cycle-life characteristics of the lithium iron phosphate-based positive electrode active material may be improved for the rechargeable lithium battery.

The first positive electrode active material is in the form of primary particles, and an average particle diameter of the primary particles of the first positive electrode active material may be less than about 2 µm. The average particle diameter of the primary particles of the first positive electrode active material may be, for example, greater than or equal to about 0.1 µm less than about 2 µm, from about 0.1 µm to about 1.8 µm, from about 0.1 µm to about 1.6 µm, from about 0.1 µm to about 1.4 µm, from about 0.1 µm to about 1.2 µm, from about 0.1 µm to about 1 µm, from about 0.1 µm to about 0.8 µm, from about 0.2 µm to about 0.8 µm, from about 0.3 µm to about 0.7 µm, or about 0.5 µm. The average particle diameter of the primary particles of the first positive electrode active material may be obtained by measuring the sizes of 20 primary particles of the first positive electrode active material in an electron microscope image for the surface or cross-section of the positive electrode active material in the form of composite positive electrode active material particles, and calculating an arithmetic mean of the size of each particle, wherein the size of each particle is defined as a diameter in the case of a spherical particle, and as a square root of a product of a major axis length and a minor axis length in the case of a non-spherical particle. The average particle diameter of the primary particles of the first positive electrode active material may be less than the average particle diameter of the primary particles of the second positive electrode active material described below.

According to some embodiments, the first positive electrode active material may have primary particles that are small and uniform in size. Accordingly, the composite positive electrode active material has high charge/discharge capacity and excellent cycle-life characteristics.

In addition, as measured by an SEM image of a cross-section of the composite positive electrode active material, an arithmetic mean size of the primary particles of the first positive electrode active material constituting the composite positive electrode active material may be less than or equal to about 200 nm, from about 50 nm to about 200 nm, or from about 50 nm to about 150 nm, and the standard deviation of the arithmetic mean size may be less than or equal to about 100 nm, less than or equal to about 50 nm, less than or equal to about 30 nm, or less than or equal to about 20 nm and may be greater than or equal to about 5 nm, greater than or equal to about 10 nm, greater than or equal to about 12 nm, or greater than or equal to about 13.5 nm. The arithmetic mean size and its standard deviation of the primary particles of the first positive electrode active material may be obtained by measuring the size of 20 random primary particles of the first positive electrode active material in an SEM image for the surface or cross-section of the composite positive electrode active material, and calculating the arithmetic mean value and a standard deviation of arithmetic mean value, wherein the size of each particle is defined as a diameter in the case of a spherical particle, and as a square root of a product of a major axis length and a minor axis length in the case of a non-spherical particle.

The first positive electrode active material may further include a carbon coating layer on the surface of the primary particles. The carbon coating layer may improve electrical conductivity of the first positive electrode active material and decrease the resistance of the positive electrode.

The carbon coating layer may include amorphous carbon and may be formed using, for example, glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof.

Specifically, the carbon coating layer may be formed by disposing the carbon raw material on the surface of the first positive electrode active material particles and then performing a firing process. The carbon raw material and primary particles may be mixed and fired to form a carbon coating layer on the surface of the primary particles, or the carbon raw material and secondary particles may be mixed and fired to form a carbon coating layer on the surface of the secondary particles and then pulverized to prepare primary particles having a carbon coating layer.

Based on 100 wt% of the first positive electrode active material, the carbon coating layer may be included in an amount from about 0.1 wt% to about 3.9 wt%, for example, from about 0.5 wt% to about 3.9 wt%, from about 1 wt% to about 3.9 wt%, from about 1.5 wt% to from about 3.9 wt%, or from about 1.7 wt% to about 3.9 wt%. The amount of the carbon coating layer may be greater than or equal to about 1.5 wt%, greater than about 1.5 wt%, greater than or equal to about 1.6 wt%, greater than or equal to about 1.7 wt%, or greater than or equal to about 1.8 wt% based on 100 wt% of the first positive electrode active material. The amount of the carbon coating layer may be analyzed by completely combusting the first positive electrode active material at a high temperature from about 1200°C to about 1400°C and in an oxygen atmosphere to convert carbon and sulfur in the first positive electrode active material into CO₂ (or CO) and SO₂, respectively. An amount of the carbon coating layer may be the amount of carbon based on 100 wt% of the first positive electrode active material.

The first positive electrode active material may be manufactured by a known method or may be a commercially available product. For example, the first positive electrode active material may be obtained by pulverizing secondary particles formed by aggregation of a plurality of primary particles and includes a lithium iron phosphate-based compound.

### Second Positive Electrode Active Material

The second positive electrode active material includes a lithium cobalt-based composite oxide.

The lithium cobalt-based composite oxide may be represented by Chemical Formula 3, which is as follows:

[Chemical Formula 3] Liₐ₃Coₓ₃M³_{y3}O_{2-b3}X_{b3}.

In Chemical Formula 3, 0.9≤a3≤1.8, 0.7≤x3≤1, 0≤y3≤0.3, 0.9≤x3+y3≤1.1, and 0≤b3≤0.1, and M³ is Al, B, Ba, Ca, Ce, Cr, Cu, Fe, Mg, Mn, Mo, Ni, Se, Si, Sn, Sr, Ti, V, W, Y, Zn, Zr, or a combination thereof.

In Chemical Formula 3, 0.8≤x3≤1 and 0≤y3≤0.2, 0.9≤x3≤1 and 0≤y3≤0.1, or 0.95≤x3<1 and 0≤y3≤0.05. M³ may be for example Al, Ca, Ce, Cr, Cu, Fe, Mg, Mo, Se, Sr, Ti, V, W, Y, Zn, Zr, or a combination thereof. M³ may play a role in increasing the structural stability of lithium cobalt-based composite oxides at high voltages, thereby suppressing structural changes or collapses due to a movement of lithium ions.

The lithium cobalt-based composite oxide may be doped with aluminum and may be represented by Chemical Formula 4, which is as follows:

[Chemical Formula 4] Liₐ₄Coₓ₄Al_{y4}M⁴_{z4}O_{2-b4}X_{b4}.

In Chemical Formula 4, 0.9≤a4≤1.8, 0.7≤x4≤1, 0.01≤y4≤0.25, 0≤z4≤0.05, 0.9≤x4+y4+z4≤1.1, and 0≤b4≤0.1, M⁴ is B, Ba, Ca, Ce, Cr, Cu, Fe, Mg, Mn, Mo, Ni, Se, Si, Sn, Sr, Ti, V, W, Y, Zn, Zr, or a combination thereof, and X is F, P, S, or a combination thereof.

In Chemical Formula 4, 0.8≤x4≤1, 0.01≤y4≤0.15, and 0≤z4≤0.05, 0.9≤x4≤1, 0.01≤y4≤0.05, and 0≤z4≤0.05, or 0.95≤x4<1, 0.01≤y4≤0.03, and 0≤z4≤0.02.

Al³⁺, which has a similar ion size (Al³⁺: 0.535 Å, Co³⁺: 0.545 Å) to Co³⁺ but the same oxidation number, may be convenient to use as a doping material. In addition, aluminum, which has a stronger Al-O binding energy (about 511±3 kJ/mol) than a Co-O binding energy (about 384.5+13.4 kJ/mol), may play a role of stabilizing the structure of the positive electrode active material during shrinkage and expansion of the positive electrode active material due to the charge and discharge, while not participating in an electrochemical reaction, and, thus, may have an advantage of being used as a doping material due to the characteristics of suppressing structural changes of the positive electrode active material due to a movement of lithium ions.

Based on 100 wt% of the lithium cobalt-based composite oxide, the amount of aluminum (i.e., doping amount) may be greater than or equal to about 0.05 wt% (greater than or equal to about 500 ppm), for example, greater than or equal to about 0.07 wt%, greater than or equal to about 0.09 wt%, greater than or equal to about 0.1 wt%, greater than or equal to about 0.12 wt%, or greater than or equal to about 0.14 wt% and may be less than or equal to about 1 wt%, less than or equal to about 0.8 wt%, less than or equal to about 0.6 wt%, less than or equal to about 0.4 wt%, or less than or equal to about 0.3 wt%. In addition, the aluminum doping amount may be from about 0.1 mol% to about 3 mol%, for example, from about 0.5 mol% to about 2 mol% or from about 0.5 mol% to about 1.5 mol% based on 100 mol% of the total metal, excluding lithium, in the lithium cobalt-based composite oxide. When the aluminum doping amount in the lithium cobalt-based composite oxide satisfies the above ranges, the composite positive electrode active material including the same may maintain structural stability even at high voltage, and, thus, the capacity at low temperature, cycle-life characteristics, pellet density, and capacity per volume may all be improved for the rechargeable lithium battery.

The above second positive electrode active material is in a form of primary particles, and an average particle diameter of the primary particles of the second positive electrode active material may be greater than or equal to about 2 µm. The average particle diameter of the primary particles of the second positive electrode active material may be, for example, from about 2 µm to about 8 µm or from about 2 µm to about 5 µm. The average particle diameter of the primary particles of the second positive electrode active material may be greater than the average particle diameter of the primary particles of the aforementioned first positive electrode active material. That is, the primary particles of the first positive electrode active material and the primary particles of the second positive electrode active material within the secondary particles may be distinguished based on particle size. The average particle diameter of the primary particle of the second positive electrode active material may be obtained by measuring the sizes of 20 primary particles of the second positive electrode active material from a scanning electron microscope image-wherein, in the case of spherical particles, the diameter is measured, and in the case of non-spherical particles, the square root of the product of the major axis length and the minor axis length is measured-and then calculating the arithmetic mean of the size of each primary particle of the second positive electrode active material.

The second positive electrode active material may further include a coating layer on the surface of the primary particle and including aluminum, titanium, or a combination thereof, and the coating layer on the surface of the primary particle may be in the form of a shell that continuously surrounds the surface of the primary particle, or in the form of an island that is discontinuously present on the surface of the primary particle. The coating layer may have a shell geometry that continuously surrounds the surface of the primary particle and may be formed with a very thin and uniform thickness.

The coating layer may include titanium, and a coating amount of the titanium may be from about 0.001 wt% to about 0.1 wt%, from about 0.005 wt% to about 0.1 wt%, from about 0.01 wt% to about 0.1 wt%, from about 0.02 wt% to about 0.1 wt%, from about 0.03 wt% to about 0.1 wt%, from about 0.04 wt% to about 0.1 wt%, from about 0.05 wt% to about 0.1 wt%, from about 0.06 wt% to about 0.1 wt%, or from about 0.07 wt% to about 0.1 wt% based on 100 wt% of a total metal, excluding lithium, in the lithium cobalt-based composite oxide and titanium in the coating layer. If the coating amount of titanium included in the coating layer satisfies the above ranges, the structural stability of the second positive electrode active material may be further improved and side reactions with the electrolyte may be effectively suppressed without increasing resistance or decreasing capacity.

A thickness of the coating layer may be from about 5 nm to about 200 nm, for example, from about 5 nm to about 150 nm, from about 5 nm to about 100 nm, from about 5 nm to about 80 nm, from about 5 nm to about 50 nm, or from about 5 nm to about 30 nm. If the coating layer satisfies the above thickness ranges, the structural stability of the positive electrode active material may be improved and side reactions with the electrolyte may be effectively suppressed without increasing resistance or decreasing capacity due to the coating. The thickness of the coating layer may be measured, for example, by SEM, TEM, TOF-SIMS, XPS, or EDS analysis, and, for example, by EDS line profile analysis of a cross-section of the positive electrode active material.

The thickness of the coating layer may be thin and uniform, at the level of tens to hundreds of nanometers. A variation in the thickness of the coating layer within one particle of the second positive electrode active material may be less than or equal to about 20%, less than or equal to about 18% or less than or equal to about 15%. The deviation in the thickness of the coating layer refers to a thickness of the coating layer within one particle of the second positive electrode active material. The deviation in the thickness of the coating layer may be, for example, obtained by measuring the thickness at about 10 points in an electron microscope image of a cross-section of a primary particle of the second positive electrode active material, calculating the arithmetic mean, dividing the absolute value of the difference between one data point and the arithmetic mean by the arithmetic mean, and multiplying by 100. The deviation or standard deviation of the thickness of the coating layer satisfying the above ranges means that a coating layer of uniform thickness is formed on the surface of the primary particle of the second positive electrode active material, and, accordingly, structural stability of the second positive electrode active material is improved, side reactions with the electrolyte are effectively suppressed, and an increase in resistance or a decrease in capacity due to the coating may be minimized.

The second positive electrode active material may be manufactured by a known method or may be a commercially available product. For example, the second positive electrode active material may be prepared in a single particle form by mixing a lithium precursor and a cobalt precursor, followed by heat treatment in an oxygen atmosphere. In addition, the second positive electrode active material may be prepared by a solid-state reaction of a mixture including a lithium precursor and a transition metal precursor, and may further include a doping metal precursor as necessary. For example, by adding an aluminum precursor, a lithium cobalt-based composite oxide in which Al is partially substituted may be formed, for example, a structure of LiCo₁₋ₓAlₓO₂ (0 < x < 0.1) in which a portion of Co in the LiCoO₂ structure is substituted with Al.

The mixture is subjected to a forming or granulation process followed by heat treatment, and during a high-temperature sintering process, the primary particles are fused and grown to form a single particle structure in which particle boundaries are substantially eliminated. In this case, the formation of the single particle does not result from aggregation between individual particles, but is achieved through crystal growth and sintering occurring within a single particle.

In addition, the second positive electrode active material may be manufactured by adding a precursor for forming an additional metal oxide or composite oxide coating layer on the surface of the single particle, followed by a post-heat treatment process, wherein the coating layer may include a lithium metal oxide, a lithium titanate-based compound, or a mixture thereof.

Here, the single particle form may refer to a structure in which particles exist as an independent phase without mutual aggregation in terms of morphology, and may include a structure that substantially does not have grain boundaries within the particle and is composed of a single particle existing independently. The single particle may be expressed as a monolithic structure, a non-aggregated structure, or a monolith structure, and may be a single crystal.

Here, the single particle may correspond to a primary particle constituting a secondary particle in the composite positive electrode active material described below, and thus, in the present specification, the single particle may be used in the same meaning as the primary particle.

### Composite Positive Electrode Active Material

The composite positive electrode active material has a particle form including a plurality of primary particles of the first positive electrode active material and a plurality of primary particles of the second positive electrode active material. The particle form of the composite positive electrode active material may be a form of secondary particles or an assembly form in which the primary particles of the first positive electrode active material and primary particles of the second positive electrode active material are agglomerated. Primary particles of the first positive electrode active material and primary particles of the second positive electrode active material may exist within the composite positive electrode active material particles. The composite positive electrode active material particles are formed by an agglomeration of a plurality of primary particles. Some of the primary particles are the primary particles of the first positive electrode active material, and the remaining primary particles are the primary particles of the second positive electrode active material. This structure is distinguished from a core-shell structure in which the particles of the first positive electrode active material are coated around a surface of the core of the second positive electrode active material particle, thereby having a shell structure. In the present disclosure, the particle form of the composite positive electrode active material may be referred to as a form of secondary particles or an assembly form, and particles described as the form of the secondary particles or the assembly form should be understood to refer to composite positive electrode active material particles.

The composite positive electrode active material is different from a conventional form in which a lithium iron phosphate-based compound and a lithium cobalt-based composite oxide are mixed. When conventionally, a lithium iron phosphate-based compound and a lithium cobalt-based composite oxide are mixed and used as a positive electrode active material, there is a problem in that high-temperature storage characteristics deteriorate due to creation of spaces between the particles of the lithium iron phosphate-based compound and the particles of the lithium cobalt-based composite oxide as charge and discharge are repeated after the formation of the electrode plate. However, the composite positive electrode active material according to some embodiments may solve the above problem by having a particle form or, specifically, a single secondary particle form by agglomerating primary particles and primary particles or, even more specifically, an assembly form, including a first positive electrode active material in the form of primary particles including a lithium iron phosphate-based compound and a second positive electrode active material in the form of primary particles including a lithium cobalt-based composite oxide.

The composite positive electrode active material particles may have a spherical or elliptical spherical geometry by closely agglomerating the primary particles of the first positive electrode active material and the primary particles of the second positive electrode active material. An average particle diameter of the composite positive electrode active material particles may be, for example, from about 3 µm to about 20 µm, from about 6 µm to about 20 µm, from about 6 µm to about 18 µm, from about 8 µm to about 18 µm, from about 10 µm to about 18 µm, or from about 12 µm to about 18 µm. An average particle diameter of the composite positive electrode active material particles may be, for example, obtained by randomly selecting 20 composite positive electrode active material particles from an electron microscope image of the composite positive electrode active material, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The amounts of the first positive electrode active material and the second positive electrode active material in the composite positive electrode active material may be appropriately controlled. The first positive electrode active material may be included in an amount from about 50 wt% to about 99 wt%, from about 55 wt% to about 95 wt%, or from about 60 wt% to about 90 wt% based on 100 wt% of the composite positive electrode active material, and the second positive electrode active material may be included in an amount from about 1 wt% to about 50 wt%, from about 5 wt% to about 45 wt%, or from about 10 wt% to about 40 wt% based on 100 wt% of the composite positive electrode active material. If the first positive electrode active material and the second positive electrode active material in the composite positive electrode active material are included so as to satisfy the above ranges, the battery may operate at a high voltage, and the battery performance, including the initial charge/discharge capacity, efficiency, discharge capacity at low temperatures (e.g., -20°C), and high-temperature storage characteristics, may be improved overall.

The number of primary particles of the second positive electrode active material in particle of the composite positive electrode active material may be 10 or less, for example, 9 or less, 8 or less, 7 or less, or 6 or less, and greater than 0, 1 or more, 2 or more, or 3 or more. For example, the number of primary particles of the second positive electrode active material in particle of the composite positive electrode active material may be in a range of 1 to 10, 2 to 10, 3 to 10, 3 to 9, 3 to 8, 3 to 7, or 3 to 6. The number of primary particles of the second positive electrode active material in particle of the composite positive electrode active material may be determined by counting the number of particles having a particle size of greater than or equal to about 2 µm within a single composite positive electrode active material particle, wherein the particle size refers to a diameter in the case of spherical particles and to a square root of a product of a major axis length and a minor axis length in the case of non-spherical particles. Here, the number of primary particles of the second positive electrode active material may be an average value of the numbers of primary particles of the second positive electrode active material in each of a plurality of composite positive electrode active material particles.

The composite positive electrode active material particle may include pores, and the porosity, which is the ratio of the area occupied by the pores to the cross-sectional area of the composite positive electrode active material particle, may be from about 10% to about 50%, for example, from about 10% to about 40%, from about 10% to about 30%, or from about 15% to about 25%. The porosity may be obtained by cutting a composite positive electrode active material particle using a focused ion beam (FIB) to obtain a cross-section and by measuring a ratio of the area occupied by pores within a cross-section of the composite positive electrode active material particle to a cross-sectional area of the composite positive electrode active material particle using an image analysis program such as Image J on a scanning electron microscope image of the cross-section. A cross-section of the composite positive electrode active materials may be obtained by cutting the composite positive electrode active materials using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the composite positive electrode active materials may be an average value of porosities measured with respect to a plurality of composite positive electrode active materials, and may be, for example, obtained by measuring the porosity of at least 20 individual composite positive electrode active materials and calculating an average value of the porosity at least 20 individual composite positive electrode active materials. If the porosity within the composite positive electrode active material particles satisfies the above ranges, the primary particles may be filled between the pores within the secondary particles during positive electrode compressing, thereby improving the pellet density or positive electrode density, and, thus, improving the capacity characteristics and energy density of the rechargeable lithium battery.

A pellet density of the composite positive electrode active material may be greater than or equal to about 2.5 g/cc and may be from about 2.5 g/cc to about 3.5 g/cc, from about 2.6 g/cc to about 3.4 g/cc, from about 2.7 g/cc to about 3.3 g/cc, or from about 2.75 g/cc to about 3.1 g/cc. The pellet density of the composite positive electrode active material may be measured by placing 3 g of the composite positive electrode active material in a mold, maintaining the composite positive electrode active material in the mold at 4 tons for 30 seconds at a temperature of 25°C, measuring the thickness of the pellet, calculating the pellet volume using the thickness of the pellet and the diameter of the mold, and dividing the mass of the composite positive electrode active material by the calculated volume. If the pellet density of the composite positive electrode active material satisfies the above ranges, powder characteristics may be improved, thereby improving capacity characteristics. The pellet density of the composite positive electrode active material may be improved when the porosity within the composite positive electrode active material particles satisfies the above ranges, so that primary particles fill between the pores during compressing.

### Method of Preparing Composite Positive Electrode Active Material

A method of preparing a composite positive electrode active material according to some embodiments includes: preparing a first positive electrode active material in a form of primary particles including a lithium iron phosphate-based compound; mixing and wet milling the first positive electrode active material and the second positive electrode active material in a form of primary particles and including a lithium cobalt-based composite oxide to prepare a first slurry; and adding the first slurry into a spray dryer and spray drying the same to prepare a first dried product.

A lithium iron phosphate-based compound, which has excellent structural stability, high heat resistance, and price competitiveness, is attracting attention. However, although the lithium iron phosphate-based compound has excellent cycle-life characteristics, cycle-life characteristics deteriorate when used at high voltages, so their usable voltage is limited.

There have been attempts to use a simple mixture of lithium cobalt-based composite oxides to achieve high capacity. High energy density may be achieved, it may be used at high voltages, and high capacity may be achieved, but the discharge capacity at low temperatures (e.g., -20°C) decreases and cycle-life characteristics may be inferior.

Some embodiments include a first positive electrode active material including a low-cost lithium iron phosphate-based compound to secure price competitiveness and a lithium cobalt-based composite oxide that can be used at a greater voltage than the lithium iron phosphate-based compound, and wet milling the low-cost lithium iron phosphate-based compound and the lithium cobalt-based composite oxide is performed to prepare a first slurry and spray drying the first slurry to prepare a dried product. The result is a composite positive electrode active material having a particle form including primary particles and primary particles-specifically, a single secondary particle form in which primary particles and primary particles are agglomerated, and, more specifically, an assembly form.

The composite positive electrode active material of the lithium iron phosphate-based compound and the lithium cobalt-based composite oxide have all the advantages of a simple mixture of these compared to a simple mixture of these, while at the same time solving the problems that arise from a simple mixture of these. More specifically, in the case of the composite positive electrode active material prepared according to the method of preparing the composite positive electrode active material according to some embodiments, the composite positive electrode active material has a particle form including primary particles of a lithium iron phosphate-based compound and primary particles of a lithium cobalt-based composite oxide, specifically, a form of secondary particles in which the primary particles and the primary particles are agglomerated and, more specifically, provide an assembly form, thereby securing price competitiveness, improving the initial charge/discharge capacity and efficiency of the rechargeable lithium battery, improving the discharge capacity and cycle-life characteristics at low temperatures, and improving the powder characteristics to increase the pellet density, improving the capacity per volume and the positive electrode utilization rate, and increasing the average operating voltage of the rechargeable lithium battery.

In the preparing method below, terms expressed using "first" and "second" in addition to the first positive electrode active material and the second positive electrode active material are expressed to identify the process of preparing a composite positive electrode active material using the first positive electrode active material and the second positive electrode active material and the process of preparing the first positive electrode active material, respectively. In the process of preparing the composite positive electrode active material using the first positive electrode active material and the second positive electrode active material, a corresponding use of "slurry" may be indicated by "first slurry"; whereas, in the process of preparing the first positive electrode active material, a corresponding use of "slurry" may be indicated as "second slurry."

For convenience, in the order described in the claims, the process of preparing a composite positive electrode active material using the first positive electrode active material and the second positive electrode active material is expressed as "first", and the process of preparing the first positive electrode active material is expressed as "second." However, it should be understood that "first" and "second" do not indicate the order between them.

### Preparing First Positive Electrode Active Material

Preparing a first positive electrode active material includes a process of preparing a first positive electrode active material including a lithium iron phosphate-based compound and being in a form of primary particles. The first positive electrode active material including the lithium iron phosphate-based compound and in the form of primary particles may be prepared according to the method described below, or a commercially available product may be obtained and used.

The preparing of the first positive electrode active material including the lithium iron phosphate-based compound and in the form of primary particles may include wet milling an iron phosphate-based precursor, a lithium raw material, and a carbon raw material mixed in a second solvent to prepare a second slurry; adding the wet-milled second slurry to a spray dryer and spray-drying the second slurry to prepare a second dried product; firing the second dried product to prepare a second fired product; and pulverizing the second fired product. Hereinafter, the steps for preparing the first positive electrode active material are sequentially described.

First, the second slurry may be prepared by mixing an iron phosphate-based precursor, a lithium raw material, and a carbon raw material in a second solvent and wet milling the mixture. The preparing of the second slurry may include mixing an iron phosphate-based precursor and a lithium raw material to prepare a raw material mixture, preparing a carbon raw material, and mixing the raw material mixture and the carbon raw material, adding a second solvent, and performing wet milling to prepare a second slurry. A mixing weight ratio of the raw material mixture and the carbon raw material is not specifically limited but may be, for example, from about 5:5 to about 99:1, from about 6:4 to about 99:1, from about 7:3 to about 99:1, from about 8:2 to about 99:1, or from about 9:1 to about 99:1.

The iron phosphate-based precursor may be an iron phosphate precursor such as iron phosphate (FePO₄) and iron(II) phosphate (Fe₃(PO₄)₂), or may be formed by adding a phosphorus raw material such as phosphoric acid (H₃PO₄), ammonium dihydrogen phosphate (NH₄H₂PO₄), diammonium hydrogen phosphate ((NH₄)₂HPO₄), or trisodium phosphate (Na₃PO₄) to an iron raw material such as iron trioxide (Fe₂O₃), iron oxalate (FeC₂O₄), or iron hydroxide (Fe(OH)₃). In addition, the iron phosphate-based precursor may be a manganese iron phosphate precursor formed by adding a manganese raw material such as manganese oxide, manganese carbonate, manganese sulfate, or manganese nitrate to the iron phosphate precursor. The iron phosphate-based precursor may be used without limitation as long as the iron phosphate-based precursor is a known material used in solid-phase reaction.

The lithium raw material may be, for example, Li₂CO₃, LiOH, a hydrate thereof, or a combination thereof.

The carbon raw material may include glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof. For example, as the carbon raw materials, a mixture of glucose and polyethylene glycol may be used, and a mixing ratio by weight is not specifically limited but may be, for example, from about 10:90 to about 90:10, from about 20:80 to about 80:20, from about 30:70 to about 70:30, from about 40:60 to about 60:40, or from about 50:50.

The wet milling may be performed by adding a second solvent, and the second solvent may be any one of ethylene glycol (EG), diethylene glycol (DEG), triethylene glycol (TEG), tetraethylene glycol (TetraEG), propylene glycol (PG), polyethylene glycol (PEG), polypropylene glycol (PPG), ethanol, water, and acetone.

The wet milling may be performed using bead mill, ball mill, vibration mill, or colloid mill equipment. For example, in some embodiments, the wet milling may be performed using a ball milling method with zirconia balls, wherein the wet milling may be conducted by rotating a milling container at a rotational speed of from about 50 rpm to about 2000 rpm for about 1 hour to about 10 hours.

In the preparing of the second slurry by wet milling, a raw material including Al, Ca, Ce, Cr, Cu, La, Mg, Mn, Mo, Nb, Ni, Sn, Sr, Ti, V, W, Y, Zn, Zr, or a combination thereof may be further added to the slurry. A raw material including Al, Mg, Mn, Ti, V, or a combination thereof may be added. The raw material including Al, Mg, Ti, V, or the combination thereof may be further added as a type of doping element, and the Al, Mg, Ti, V, or the combination thereof may be added in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, in the lithium iron phosphate-based compound of the first positive electrode active material. A raw material containing Ti may be further added to the second slurry, and the amount of Ti may be added so as to be from about 0.1 mol% to about 0.5 mol%, from about 0.2 mol% to about 0.5 mol%, from about 0.3 mol% to about 0.5 mol%, or about 0.4 mol%, based on a total metal, excluding lithium, in the first positive electrode active material. Accordingly, the rate characteristics and cycle-life characteristics may be improved for the rechargeable lithium battery.

Next, the wet-milled second slurry may be added to a spray dryer and spray-dried to produce a second dried product.

The wet-milled second slurry may be injected into a spray dryer and sprayed to generate droplets containing a desired uniform composition, and then the formed droplets may be dried to produce a second dried product.

The spray dryer may include an ultrasonic spray device, a one- and two-fluid air nozzle spray device, an ultrasonic nozzle spray device, a filter expansion droplet generator (FEAG), and a disk-type droplet generator. Any known spray dryer may be used.

An amount of the second slurry added may vary depending on the spray dryer but may be appropriately adjusted. In some embodiments, drying takes place with a blower speed of about 50 Hz and an addition pressure of about 0.5 MPa, an addition speed of the second slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the second slurry is a value converted on a solid content basis, and is defined as an amount of the second slurry supplied per minute (min) based on a mass of solid content in the second slurry. When the addition speed of the second slurry added to the spray dryer satisfies the above ranges, secondary particles composed of primary particles, each having a uniform size, may be produced, and the average size of the primary particles may be adjusted to less than or equal to about 200 nm, and a size of the secondary particles may also be uniformly controlled.

The spray drying may be performed at a temperature of greater than or equal to about 100°C, for example, at a temperature from about 150°C to about 400°C, from about 150°C to about 300°C, or from about 200°C to about 250°C for drying the components and evaporating the solvent.

Next, the second dried product may be fired to produce a second fired product.

In the preparing of the second fired product, the firing may be performed under vacuum or inert gas and at a temperature from about 700°C to about 1000°C, for example, from about 725°C to about 900°C or from about 750°C to about 800°C. The inert gas may be argon or nitrogen.

The second fired product may be in the form of secondary particles in which a plurality of primary particles is agglomerated. More specifically, the secondary particles of the second fired product may have a spherical or ellipsoidal geometry as the primary particles are closely agglomerated with each other. An average particle diameter of the secondary particles may be, for example, from about 3 µm to about 20 µm, from about 5 µm to about 18 µm, or from about 7 µm to about 15 µm. The average particle diameter of the secondary particles may be obtained by randomly selecting 20 secondary particles from an electron microscope image of the second fired product, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The secondary particles of the second fired product may include pores, and the porosity may be from about 10% to about 50%, for example, from about 10% to about 40%, or from about 10% to about 30%. The porosity may be the ratio of the area occupied by the pores within the secondary particles to the cross-sectional area of the secondary particles measured using an image analysis program such as Image J in a scanning electron microscope image of the cross-section of the secondary particles of the second fired product. A cross-section of the secondary particles may be obtained by cutting the second fired product using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the second fired products may be an average value of porosities measured with respect to a plurality of the second fired products, and may be, for example, obtained by measuring the porosity of at least 20 individual second fired products and calculating an average value of the porosity at least 20 individual second fired products.

The second fired product may further include a carbon coating layer on the surfaces of the secondary particles, the surfaces of the primary particles constituting the secondary particles, or the surfaces of both. If the second fired product is later pulverized to prepare the first positive electrode active material of primary particles, the carbon coating layer may improve the electrical conductivity of the first positive electrode active material and may decrease the resistance of the positive electrode. The carbon coating layer may be formed by a firing process of the above-mentioned carbon raw materials.

Next, the second fired product may be pulverized.

Pulverizing may be performed using equipment such as a jet mill, a ball mill, a bead mill, or a sand mill.

The pulverization speed during the above pulverizing is not specifically limited as long as the second fired product in the form of an assembly is separated into primary particles constituting the assembly, and, for example, a pulverization speed may exceed about 2000 rpm or may be performed at a pulverization speed from about 3000 rpm to about 6000 rpm or from about 4000 rpm to about 6000 rpm. The pulverization of the above second fired product may be performed under conditions where the secondary particles may be pulverized and separated into a plurality of primary particles. If the pulverization speed is less than 2000 rpm, the secondary particles may not be pulverized and may exist in the form of an assembly. If the pulverization speed is greater than about 6000 rpm, the pulverized and separated primary particles may be damaged.

Through the pulverization process of the second fired product, the first positive electrode active material including the lithium iron phosphate-based compound and being in the form of primary particles may be prepared. The first positive electrode active material prepared according to the above-described method may be used.

The first positive electrode active material includes the lithium iron phosphate-based compound. Because the details of the first positive electrode active material may be the same as or similar to the composite positive electrode active material described above, a description of the first positive electrode active material for this section is omitted.

### Preparing First Slurry

Preparing the first slurry includes mixing the first positive electrode active material and the second positive electrode active material in the form of primary particles, which includes a lithium cobalt-based composite oxide and then wet milling the first positive electrode active material and the second positive electrode active material in the form of primary particles. Specific details regarding the first positive electrode active material and the second positive electrode active material can be described in the same manner as described above, and those details are therefore omitted below.

The method of mixing the first positive electrode active material and the second positive electrode active material is not particularly limited, and for example, a mixer may be used.

A weight ratio of mixing of the first positive electrode active material and the second positive electrode active material may be from about 50:50 to about 99:1, from about 55:45 to about 95:5, or from about 60:40 to about 90:10. When the weight ratio of mixing of the first positive electrode active material and the second positive electrode active material satisfies the above ranges, the initial charge/discharge capacity and its efficiency are improved while securing price competitiveness, the discharge capacity and cycle-life characteristics at low temperatures are improved, the powder characteristics are improved so that the pellet density increases, the capacity per volume and positive electrode utilization rate are improved for the rechargeable lithium battery, and the average operating voltage can increase. In addition, when a second positive electrode active material having a relatively large average particle diameter is included in an excessive amount, it is difficult to properly perform spray drying, and even if spray drying is performed, it may be difficult to form an assembly such as done in some embodiments.

A first slurry may be prepared by adding a first solvent to the first positive electrode active material and the second positive electrode active material during wet milling, and the specific type of the first solvent is as described for the second solvent. The wet milling may be performed using a method such as ultrasonic dispersing, stirring dispersing, using a homogenizer, using a high-shear mixer, using a jet mill, ball milling, or bead milling and a method for wet milling is not specifically limited as long as the method is a method of wet milling the first positive electrode active material and the second positive electrode active material. For example, in some embodiments, the wet milling may be performed using a ball milling method with zirconia balls, wherein the wet milling may be conducted by rotating a milling container at a rotational speed of from about 10 rpm to about 100 rpm for about 10 minutes to about 3 hours.

### Preparing First Dried Product

Preparing a first dried product includes adding the first slurry to a spray dryer and spray drying the first slurry.

The first slurry may be added to a spray dryer and sprayed to generate droplets including a uniform composition, and then the formed droplets may be dried to prepare a first dried product. The solvent in the droplets evaporates, and remaining solids may be dried in the form of particles.

The spray dryer may include an ultrasonic spray device, one- and two-fluid air nozzle spray device, an ultrasonic nozzle spray device, a filter expansion droplet generator (FEAG), and a disk-type droplet generator. Any known spray dryer may be used.

An amount of the first slurry added may vary depending on the spray dryer but may be appropriately adjusted. The addition speed of the first slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the first slurry is a value converted on a solid content basis, and is defined as an amount of the first slurry supplied per minute (min) based on a mass of solid content in the first slurry. If the addition speed of the first slurry added to the spray dryer satisfies the above ranges, the drying efficiency may be improved, a powder having a narrow particle size distribution and a relatively uniform geometry may be formed, and clogging and contamination inside the dryer may be prevented.

The spray drying may be performed at a temperature of greater than or equal to about 100°C, for example, from about 150°C to about 400°C, from about 150°C to about 300°C, or from about 200°C to about 250°C for drying the components and evaporating the solvent.

The first dried product obtained according to the above steps may have a particle form including primary particles of the first positive electrode active material and primary particles of the second positive electrode active material, and for example, may have a form of secondary particles in which the primary particles of the first positive electrode active material and primary particles of the second positive electrode active material are agglomerated, and the secondary particles may be expressed as an assembly. The first dried product may correspond to or be identical to the composite positive electrode active material in the present specification.

The method of preparing the composite positive electrode active material may further include firing the first dried product to prepare a first fired product, after the adding of the first slurry to the spray dryer and spray drying the first slurry to prepare a first dried product. Preparing the first fired product may be expressed as a first firing step to distinguish firing the first dried product from spray drying and firing the second slurry. The composite positive electrode active material may be further strengthened by performing a first firing step after spray drying, thereby further stabilizing a crystal structure of the composite positive electrode active material and significantly improving the electrochemical characteristics, mechanical strength, and cycle-life stability of the composite positive electrode active material.

The first firing step may be performed under vacuum or inert gas and at a temperature from about 300°C to about 1000°C, for example, from about 300°C to about 500°C, or from about 350°C to about 450°C. The inert gas may be argon or nitrogen. If the above firing temperature satisfies the above ranges, electrochemical characteristics, mechanical strength, and cycle-life stability may be greatly improved for the composite positive electrode active material.

The first positive electrode active material may have a particle form including primary particles of the first positive electrode active material and primary particles of the second positive electrode active material and may have a form of secondary particles or an assembly form in which primary particles of the first positive electrode active material and primary particles of the second positive electrode active material are agglomerated. The first fired product may also correspond to the composite positive electrode active material in the present specification or may be the same as the composite positive electrode active material.

### Rechargeable Lithium Battery

A rechargeable lithium battery according to some embodiments includes: a positive electrode including a positive electrode current collector and a positive electrode active material layer disposed on the positive electrode current collector and including the aforementioned composite positive electrode active material; a negative electrode; and an electrolyte. The rechargeable lithium battery may include a positive electrode, a negative electrode, a separator between the positive electrode and the negative electrode, and an electrolyte.

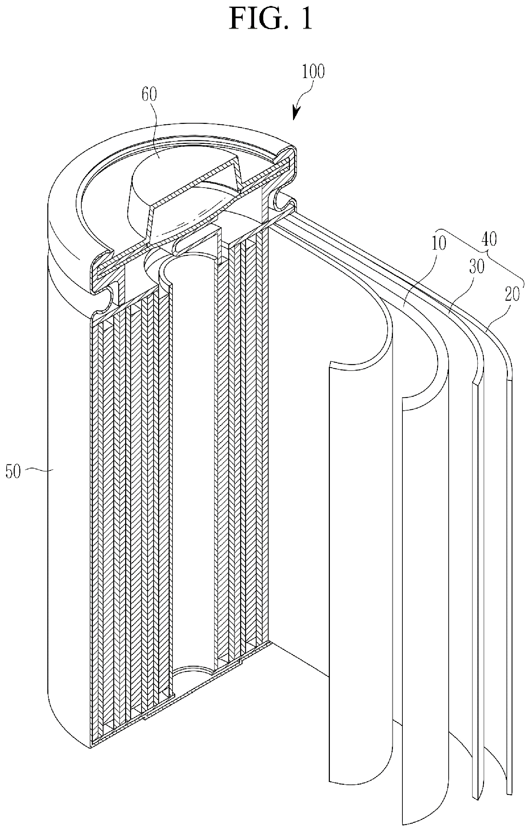

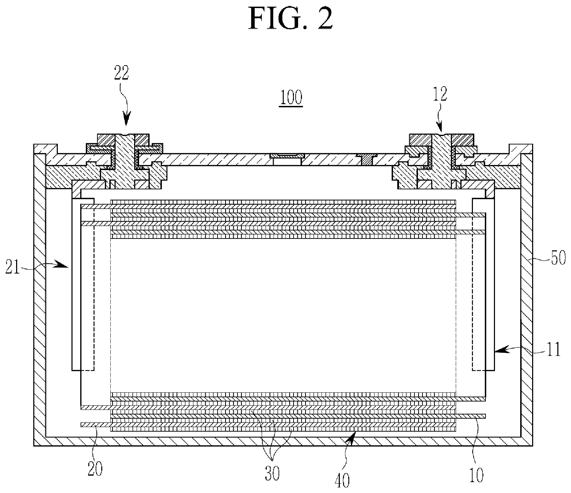

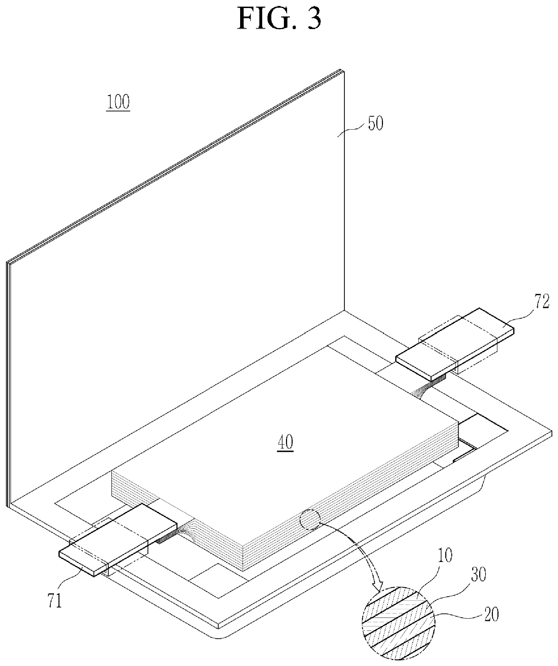

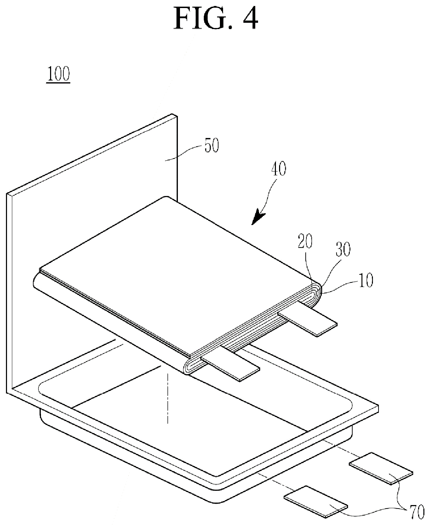

The rechargeable lithium battery may be classified into geometries of a cylinder, a prism, a pouch, or a coin. FIG. 1 is a schematic view showing a cross-section of a cylindrical rechargeable lithium battery cut along a vertical axis and an electrode assembly 40 extending from the cylindrical rechargeable lithium battery according to some embodiments of the present disclosure. FIG. 2 is a cross-sectional view of a prismatic rechargeable lithium battery according to some embodiments of the present disclosure. FIGS. 3 and 4 are each a schematic exploded perspective view of a pouch-type rechargeable lithium battery according to some embodiments of the present disclosure. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown).

The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. The rechargeable lithium battery 100 may include an electrode tab 70 that serves as an electrical path for conducting current formed in an electrode assembly 40 to the outside. The electrode tab 70 may be disposed in the same direction as in FIG. 4, or the positive electrode tab 71 and the negative electrode tab 72 may be disposed in opposite directions as in FIG. 3.

### Positive Electrode

The positive electrode current collector is not particularly limited as long as the positive electrode current collector has conductivity and does not cause an undesirable chemical change in the rechargeable lithium battery and may be an aluminum foil or a stainless steel foil having a thickness from about 10 µm to about 15 µm.

The positive electrode active material layer includes the aforementioned composite positive electrode active material. Specific details of the composite positive electrode active material are the same as those described above.

An amount of the composite positive electrode active material may be from about 60 wt% to about 99.9 wt%, from about 70 wt% to about 99.8 wt%, from about 80 wt% to about 99 wt%, or from about 90 wt% to about 98 wt% based on 100 wt% of the positive electrode active material layer.

The positive electrode active material layer may optionally further include a binder, a conductive material, or a combination thereof.

The binder may serve to adhere the composite positive electrode active material particles well to each other and also to adhere the composite positive electrode active material well to the positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, or nylon, but the binder is not limited thereto.

The conductive material is included to provide electrode conductivity, and any electrically conductive material may be used as a conductive material unless the electrically conductive material causes an undesirable chemical change in a battery. Examples of the conductive material may include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

In the positive electrode active material layer, an amount of the binder may be from about 0.1 wt% to about 5 wt% based on 100 wt% of the positive electrode active material layer, and an amount of the conductive material may be from about 0.1 wt% to about 5 wt% based on 100 wt% of the positive electrode active material layer.

The positive electrode active material layer may further include other positive electrode active materials within a range that does not impede the purpose of the present disclosure in addition to the aforementioned components or may further include an irreversible positive electrode additive.

In addition to the aforementioned composite positive electrode active material, the positive electrode active material layer may further include a positive electrode active material having a form of primary particles and including the aforementioned lithium iron phosphate-based compound (hereinafter, "third positive electrode active material") and/or a positive electrode active material having a form of primary particles and including the aforementioned lithium cobalt-based composite oxide (hereinafter, "fourth positive electrode active material"). Here, the third positive electrode active material and/or the fourth positive electrode active material may each independently be those in which the first positive electrode active material and/or the second positive electrode active material included in the composite positive electrode active material are not assembled and are present in a separated state. In this case, the average particle diameter of the primary particles of the third positive electrode active material may be the same as described above for the first positive electrode active material, and the average particle diameter of the primary particles of the fourth positive electrode active material may be the same as described above for the second positive electrode active material. Here, the third positive electrode active material and/or the fourth positive electrode active material are present in a non-aggregated, separated state without being agglomerated with the above-described composite positive electrode active material to form an assembled structure.

When the positive electrode active material layer further includes the third positive electrode active material and/or the fourth positive electrode active material in addition to the composite positive electrode active material, a weight ratio of the composite positive electrode active material to the third positive electrode active material, the fourth positive electrode active material, or a combination thereof may be about 1:9 to about 9:1 and may be appropriately added depending on the purpose. The positive electrode active material having the form of primary particles may further include the aforementioned carbon coating layer on the surface of the primary particle, and, since the specific details of the carbon coating layer are the same as those described above, a description of the carbon coating layer is omitted in this section.

The irreversible positive electrode additive refers to a compound that acts as a sacrificial positive electrode that can compensate for the conversion to irreversible Li that no longer participates in the charge/discharge reaction by participating in the formation of a SEI (solid electrolyte interface) film on the negative electrode surface during charge/discharge. The irreversible positive electrode additive is a compound that can be decomposed during the formation process to provide Li and does not participate in the subsequent charge/discharge process. By adding such an irreversible positive electrode additive, the consumed lithium may be replenished, thereby compensating for lithium loss and improving the energy density, cycle-life, and stability of the rechargeable lithium battery.

The irreversible positive electrode additive may include a lithium iron-based oxide, a lithium cobalt-based oxide, a lithium nickel-based oxide, or a combination thereof.

The lithium iron-based oxide may be Li₅FeO₄, LiFeO₂, LiFe₅O₈, or a combination thereof, and among these, using Li₅FeO₄ may provide a lot of lithium in the formation process, which may greatly compensate for irreversible lithium and, thus, may greatly achieve the effect of the irreversible positive electrode additive.

The lithium cobalt-based oxide may be Li₆CoO₄, and the use of Li₆CoO₄ may provide a lot of lithium in the formation process, which can greatly compensate for the irreversible lithium and, thus, may achieve the effect of the irreversible positive electrode additive.

The lithium nickel-based oxide may be Li₂NiO₂, and the use of Li₂NiO₂ may provide a lot of lithium in the formation process, which may consequently compensate for a lot of irreversible lithium and, thus, may achieve the effect of the irreversible positive electrode additive.

An average particle diameter D₅₀ of the irreversible positive electrode additive is not specifically limited but may be, for example, from about 0.5 µm to about 20 µm such as, for example, from about 0.5 µm to about 10 µm, from about 0.5 µm to about 5 µm, or from about 0.5 µm to about 3 µm.

### Negative Electrode

A negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode current collector is not particularly limited as long as the negative electrode current collector has conductivity without causing undesirable chemical changes in the rechargeable lithium battery and may be a copper foil having a thickness of from about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, or calcined coke.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an element selected from an alkali metal, an alkaline earth metal, a Group 13 element, a Group 14 element [excluding Si], a Group 15 element, a Group 16 element, a transition metal, a rare earth element, and a combination thereof and may be, for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. In some embodiments, the silicon-carbon composite may include a secondary particle (core) in which silicon primary particles are assembled and an amorphous carbon coating layer (shell) on a surface of the secondary particle. The amorphous carbon may also be present between the silicon primary particles; the silicon primary particles may be coated with amorphous carbon. The secondary particles may exist dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 70 wt%, an amount of crystalline carbon may be from about 1 wt% to about 60 wt%, and an amount of amorphous carbon may be from about 15 wt% to about 50 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may be present as silicon alone, in the form of a silicon alloy, or in an oxidized form. The oxidized form of the silicon may be represented as SiOₓ (0<x≤2). The atomic ratio of Si:O, which indicates the degree of oxidation, may be about 99:1 to about 33:67. When a definition is not otherwise provided, an average particle diameter D₅₀ indicates a diameter of particle where a cumulative volume is about 50 vol% in a particle size distribution.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, a mixing ratio may be about 1:99 to about 90:10 by weight.

The negative electrode active material may be included in an amount from about 90 wt% to about 99.8 wt% or from about 94 wt% to about 99 wt%, based on 100 wt% of the negative electrode active material layer.

The binder serves to well adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless it causes an undesirable chemical change. Examples of the conductive material include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

### Electrolyte

An electrolyte for a rechargeable lithium battery is an electrolyte solution and includes a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC). The ester-based solvent may include methyl acetate, ethyl acetate, n-propyl acetate, t-butyl acetate, methyl propionate, ethyl propionate, decanolide, mevalonolactone, valerolactone, or caprolactone. The ether-based solvent may include dibutyl ether, tetraglyme, diglyme, dimethoxyethane, 2-methyltetrahydrofuran, 2,5-dimethyltetrahydrofuran, or tetrahydrofuran. The ketone-based solvent may include cyclohexanone. The alcohol-based solvent may include ethanol, or isopropyl alcohol, and the aprotic solvent may include nitriles such as R-CN (wherein R is a C2 to C20 linear, branched, or cyclic hydrocarbon group, and may include a double bond, an aromatic ring, or an ether group); amides such as dimethylformamide; dioxolanes such as 1,3-dioxolane, or 1,4-dioxolane; or sulfolanes.

The non-aqueous organic solvent may be used alone or in combination with two or more non-aqueous organic solvents, and when two or more non-aqueous organic solvents are used in combination, the mixing ratio may be appropriately adjusted depending on intended battery performances, which is widely understood by those working in the relevant field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve battery cycle-life of the rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, excellent performance can be achieved, and lithium ions can move effectively.

### Separator

Depending on the type of rechargeable lithium battery, a separator may exist between the positive and negative electrodes. The separator may include polyethylene, polypropylene, polyvinylidene fluoride, or a multilayer film of two or more layers and may of course be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (e.g., TEFLON^{®}), or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm, or from about 1 µm to about 5 µm.

Hereinafter, examples and comparative examples of the present invention are described. However, the examples described below are only some embodiments of the present invention, and the present invention is not limited to the examples described below.

### Example 1

### (1) Preparation of Composite Positive Electrode Active Material

### (Preparation of a first electrode active material)

Mn_{0.6}Fe_{0.4}PO₄ as an iron phosphate-based precursor and Li₂CO₃ as a lithium raw material were mixed in a molar ratio of 2: 1 to prepare a raw material mixture. In addition, a carbon raw material was prepared by mixing glucose and polyethylene glycol in a weight ratio of 50:50. 90 wt% of the raw material mixture and 10 wt% of the carbon raw material were mixed into a combined mixture, and distilled water as a second solvent was added to the combined mixture to wet-mill the mixture into a second slurry. The wet milling was carried out using a ball milling apparatus. Specifically, a mixture of about 90 wt% of the raw material mixture and about 10 wt% of the carbon source material was introduced into a milling container having a capacity of about 5 L, together with about 3 kg of zirconia balls and about 2 kg of water, and the wet milling was performed by rotating the container at a rotational speed of about 100 rpm for about 3 hours. During the wet milling, TiO₂ as a titanium-based raw material, and the amount was adjusted such that Ti accounted for 0.4 mol% based on a total metal, excluding lithium, of a finally obtained lithium iron phosphate-based compound.

The wet-milled second slurry was fed into a spray dryer (Büchi Mini Spray Dryer B-290) at 0.5 kg/min and then spray-dried at 200°C to obtain a second dried product. This second dried product was fired at 750°C for 8 hours to obtain a second fired product, which was pulverized at 6000 rpm by using an air jet-mill into primary particles to obtain a first positive electrode active material. Through the pulverization process, the second fired product (which included the lithium iron phosphate-based compound in the form of secondary particles (or assemblies) in which a plurality of the primary particles was agglomerated) was pulverized into the first positive electrode active material in which the plurality of primary particles was not agglomerated but were, instead, separated. The first positive electrode active material had a composition of Li(Mn_{0.6}Fe_{0.4})_{0.996}Ti_{0.004}PO₄ and was in the form of primary particles having an average particle diameter of 0.5 µm. On the surface of each primary particle, a carbon coating layer was confirmed to have formed.

### (Preparation of a second electrode active material)

Lithium carbonate, Co₃O₄ (D₅₀: 2.5 µm), and aluminum oxide (Al₂O₃) were mixed to obtain a first mixture. The contents of lithium carbonate, Co₃O₄ (D₅₀: 2.5 µm), and aluminum oxide (Al₂O₃) in the mixture were stoichiometrically controlled so that the finally obtained second positive electrode active material could have a composition of LiCo_{0.99}Al_{0.01}O₂.

The first mixture was subjected to a first heat treatment to obtain core particles. The first heat treatment was performed including a heating step of raising the temperature from 25°C to 900°C at a heating rate of 4.5°C/min, and a holding step of maintaining 900°C for 5 hours. The core particles had a single particle form, and the average particle diameter of the single particle was 4 µm, and were a lithium cobalt-based composite oxide having a composition of LiCo_{0.99}Al_{0.01}O₂. Here, the single particle is identical to the primary particle in this specification.

Titanium oxide and cobalt hydroxide (Co(OH)₂) were added to the core particles to obtain a second mixture. The second mixture was subjected to a second heat treatment at approximately 900°C to obtain a second positive electrode active material. The second positive electrode active material included the core particles and a coating layer containing Li₄Ti₅O₁₂ formed on the surface of the core particles. The titanium coating amount in the coating layer was 0.07 wt% based on the total metal content excluding lithium in the lithium cobalt-based composite oxide and the titanium in the coating layer, and the thickness of the coating layer was 5 nm.

### (Preparation of Composite Positive Electrode Active Material)

The first positive electrode active material and the second positive electrode active material were mixed at a weight ratio of 9:1 using a mixer (L5M-A) at 15 rpm for 30 minutes, and water was added as a first solvent to perform wet milling, thereby preparing a first slurry. The first slurry was added to a spray dryer (Büchi Mini Spray Dryer B-290) at 0.5 kg/min and then spray-dried at 200°C to obtain a first dried product. The wet milling was performed using a ball milling apparatus. Specifically, about 3 kg of zirconia balls, about 2 kg of water, and about 2 kg of a mixture of the first positive electrode active material and the second positive electrode active material mixed at a weight ratio of 9:1 were introduced into a milling container having a capacity of about 5 L, and the container was rotated at a rotational speed of about 50 rpm for about 1 hour. The first dried product was a composite positive electrode active material in the form of secondary particles in which the primary particles of the first positive electrode active material and the primary particles of the second positive electrode active material were agglomerated.

### (2) Manufacturing of Positive Electrode

The composite positive electrode active material was mixed with polyvinylidene fluoride as a binder and carbon nanotube as a conductive material in a weight ratio of 96:2:2 (positive electrode active material:binder:conductive material) to prepare a positive electrode active material composition. This composition was dispersed in an N-methyl pyrrolidone solvent to prepare a positive electrode active material slurry, which was coated on a 15-µm-thick Al foil and then dried and compressed to manufacture a positive electrode.

### (3) Manufacturing of Rechargeable Lithium Battery Cell

97.5 wt% of graphite as a negative electrode active material, and 1.5 wt% of carboxymethyl cellulose and 1 wt% of styrene butadiene rubber as a binder were dispersed in distilled water to prepare a negative electrode active material slurry. This slurry was coated on a 10 µm-thick Cu foil and then dried and compressed to manufacture a negative electrode.

Between the positive electrode and the negative electrode, a 10 µm-thick polyethylene separator was disposed to manufacture an electrode assembly, which was inserted into a case, and an electrolyte was injected into the case to manufacture a rechargeable lithium battery cell (a pouch-type cell of 100 mAh level). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Examples 2 and 3

Composite positive electrode active materials, positive electrodes, and rechargeable lithium battery cells according to Examples 2 and 3 were manufactured by substantially the same method as Example 1, except that in the process of the section '(1) Preparation of Composite Positive Electrode Active Material' of Example 1, the first positive electrode active material and the second positive electrode active material were not mixed in a weight ratio of 9:1 but were mixed, instead, in weight ratios described in Table 1.

**Table 1:**

| | Composition of first positive electrode active material | Weight ratio of first positive electrode active material and second positive electrode active material |
|---|---|---|
| Example 1 | Li(Fe_{0.4}Mn_{0.6})_{0.996}Ti_{0.004}PO₄ | 9:1 |
| Example 2 | Li(Fe_{0.4}Mn_{0.6})_{0.996}Ti_{0.004}PO₄ | 8:2 |
| Example 3 | Li(Fe_{0.4}Mn_{0.6})_{0.996}Ti_{0.004}PO₄ | 7:3 |

### Example 4

A composite positive electrode active material, a positive electrode, and a rechargeable lithium battery cell were manufactured in the same manner as in Example 2 except that in the process of the section '(1) Preparation of Composite Positive Electrode Active Material' of Example 2, the first slurry was added to a spray dryer, spray-dried to obtain a first dried product, and then further fired at a temperature of 400°C for 8 hours under a nitrogen atmosphere to manufacture a first fired product. The composite positive electrode active material may be called a first fired product.

### Comparative Examples 1 to 3

Positive electrodes, and rechargeable lithium battery cells were manufactured in the same manner as in Examples 1 to 3, except that in the process of '(2) Manufacturing of Positive Electrode' of Examples 1 to 3, the first positive electrode active material prepared in the process of the section '(1) Preparation of Composite Positive Electrode Active Material,' and the prepared second positive electrode active material were simply mixed using a mixer (L5M-A) at 15 rpm for 30 minutes in the weight ratio of the first positive electrode active material and the second positive electrode active material according to Examples 1 to 3 described in Table 1. In the positive electrode active material, the first positive electrode active material and the second positive electrode active material did not exist in the form of an agglomerated assembly but existed in a dispersed state.

### Evaluation Example 1: Evaluation of Composite Positive Electrode Active Material

### (1) Porosity Evaluation

The porosity of the composite positive electrode active materials prepared in Examples 1 to 4 was measured and shown in Table 2. Using the Image J image analysis program, a ratio of the area occupied by pores within the cross-section of the secondary particles to the cross-sectional area of the secondary particles was measured from a scanning electron microscope image of the cross-section of the secondary particles of the composite positive electrode active material, and this was expressed as the porosity in Table 2.

### (2) Particle Analysis

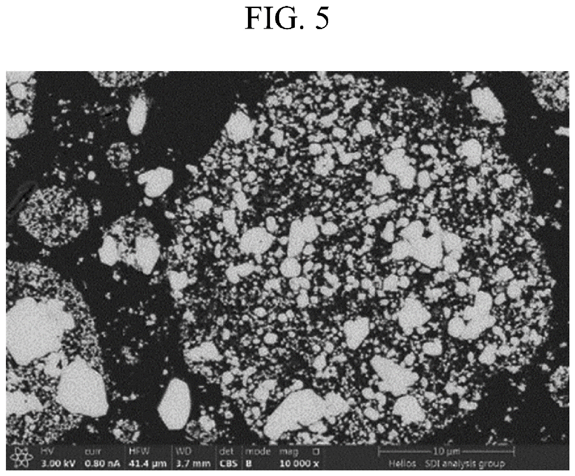

The composite positive electrode active material of Example 1 was analyzed by taking a scanning electron microscope image of the cross-section. FIG. 5 is a scanning electron microscope photograph of a cross-section of the composite positive electrode active material prepared in Example 1.

In FIG. 5, the black color indicates internal pores within a single composite positive electrode active material particle, the gray color indicates the first positive electrode active material, and the second positive electrode active material. Among those marked in gray, the second positive electrode active material refers to particles having a particle size of greater than or equal to about 2 µm, whereas the first positive electrode active material refers to the remaining particles having a particle size of less than about 2 µm, wherein the particle size is defined as a diameter in the case of spherical particles and as a square root of a product of a major axis length and a minor axis length in the case of non-spherical particles.

As in Example 1, the composite positive electrode active materials prepared in Examples 2 to 4 were photographed using a scanning electron microscope, and with reference to the photographs, the average particle diameter of the secondary particles, the average particle diameter, the arithmetic mean size, and the standard deviation of the primary particles of the first positive electrode active material, and the average particle diameter of the primary particles of the second positive electrode active material were measured, and are shown in Table 2.

The average particle diameter of the secondary particles was obtained by randomly selecting 20 secondary particles in the scanning electron microscope image of each of the composite positive electrode active materials, measuring the size of each secondary particle, and calculating an arithmetic mean of the size of each secondary particle, wherein the size of each secondary particle is defined as a diameter in the case of a spherical particle, and as a square root of a product of a major axis length and a minor axis length in the case of a non-spherical particle. The average particle diameter of the primary particles of the first positive electrode active material and the average particle diameter of the primary particles of the second positive electrode active material were also obtained by randomly selecting 20 primary particles of the first positive electrode active material and 20 primary particles of the second positive electrode active material, respectively, from the scanning electron microscope image of each composite positive electrode active material, measuring the size of each primary particle, and calculating an arithmetic mean of the size of each primary particle, wherein the size of each primary particle is defined as a diameter in the case of a spherical particle, and as a square root of a product of a major axis length and a minor axis length in the case of a non-spherical particle. In this case, within the composite positive electrode active material, as described above, particles having a particle size of less than about 2 µm are regarded as primary particles of the first positive electrode active material and their particle sizes are measured to obtain an arithmetic mean, whereas particles having a particle size of greater than or equal to about 2 µm are regarded as primary particles of the second positive electrode active material and their particle sizes are measured to obtain an arithmetic mean.

The arithmetic mean size and standard deviation of the first positive electrode active material were obtained by measuring sizes of 20 primary particles of the first positive electrode active material from the scanning electron microscope image of the cross-section of the composite positive electrode active material-wherein the particle size is defined as a diameter in the case of spherical particles and as a square root of a product of a major axis length and a minor axis length in the case of non-spherical particles-and calculating the arithmetic mean and the standard deviation of the arithmetic mean.

The number of primary particles of the second positive electrode active material in the composite positive electrode active material was determined by counting the number of particles having a particle size of greater than or equal to about 2 µm in the scanning electron microscope image of the cross-section of the composite positive electrode active material, wherein the particle size is defined as a diameter in the case of spherical particles and as a square root of a product of a major axis length and a minor axis length in the case of non-spherical particles. Here, the number of primary particles is an average value of the numbers of primary particles of the second positive electrode active material in a plurality of composite positive electrode active material particles.

Meanwhile, unlike Examples 1 to 4, Comparative Examples 1 to 3 (in which the first positive electrode active material and the second positive electrode active material were simply mixed rather than spray-dried into a dried product and fired into an assembly form) provided the first and second positive electrode active material in a dispersed state and, thus, an evaluation for Comparative Examples 1 to 3 is not shown in Table 2.

**Table 2:**

| | Porosity (%) | Average particle diameter of secondary particles (µm) | Average particle diameter of primary particles of first positive electrode active material (µm) | Arithmetic mean size of primary particles of first positive electrode active material (nm) | Standard deviation of primary particles of first positive electrode active material (nm) | Average particle diameter of primary particles of second positive electrode active material (µm) | The number of primary particles of the second positive electrode active material in composite positive electrode active material |
|---|---|---|---|---|---|---|---|
| Example 1 | 21.3 | 15 | 0.5 | 100 | 13.8 | 4 | 3 |
| Example 2 | 19.2 | 15 | 0.5 | 100 | 13.8 | 4 | 5 |
| Example 3 | 17.4 | 15 | 0.5 | 100 | 13.8 | 4 | 8 |
| Example 4 | 16.8 | 15 | 0.5 | 100 | 13.8 | 4 | 5 |

### Evaluation Example 2: Pellet Density Evaluation

The pellet density of the (composite) positive electrode active materials of Examples 1 to 4 and Comparative Examples 1 to 3 were measured, and the results are shown in Table 3. The pellet density was determined by placing 3 g of each of the (composite) positive electrode active materials in a mold, maintaining each of the (composite) positive electrode active materials in the mold at 4 tons for 30 seconds at a temperature of 25°C, measuring a thickness of the pellet, calculating the pellet volume using the thickness of the pellet and the diameter of the mold, and dividing the mass of the (composite) positive electrode active material by the calculated volume.

### Evaluation Example 3: Evaluation of Battery Performance

### (1) Evaluation of Initial Charge/discharge Capacity and Efficiency

The rechargeable lithium battery cells of Examples 1 to 4 and Comparative Examples 1 to 3 were charged to the evaluation voltage of 4.45 V at 0.2 C rate and discharged to a cut-off voltage of 3.0 V at 0.2 C rate at 25°C to measure initial charge/discharge capacity, which was used to calculate initial efficiency according to Equation 1. The results are shown in Table 3.

Equation 1 is as follows: [Equation 1] $Initial efficiency \left[%\right] = \left[\begin{matrix}discharge capacity at {1}^{st} cycle / charge capacity at \\ {1}^{st} cycle\end{matrix}\right] \times 100 .$

### (2) Average Voltage

The rechargeable lithium battery cells of Examples 1 to 4 and Comparative Examples 1 to 3 were measured with respect to an average voltage at SOC (State of Charge) 50% during the initial discharge, and the results are shown in Table 3.

### (3) Low-temperature Capacity Evaluation

The rechargeable lithium battery cells of Examples 1 to 4 and Comparative Examples 1 to 3 were fully charged at 0.2 C rate to the evaluation voltage of 4.45 V and then discharged to 3.0 V at 0.2 C rate under an atmosphere set at -20°C to measure low-temperature discharge capacity. The results are shown in Table 3.

### (4) Cycle-life Characteristics Evaluation

The rechargeable lithium battery cells of Examples 1 to 4 and Comparative Examples 1 to 3 were 50 times or more repeatedly charged to the evaluation voltage of 4.45 V at 0.2 C rate and then discharged to a cut-off voltage of 3.0 V at 0.2 C rate after the initial charge and discharge to calculate a ratio of 50^{th} cycle discharge capacity to the initial discharge capacity according to Equation 2, below, and the results are shown in Table 3.

Equation 2 is as follows: [Equation 2] $\begin{matrix}Cycle - life \left[%\right] = \left[Discharge capacity at {50}^{th} cycle/Discharge capacity at {1}^{st} cycle\right] \times \\ 100 .\end{matrix}$

### (5) Evaluation of Positive Electrode Utilization Rate

The lithium secondary batteries were fabricated using the positive electrode sheets prepared in Examples 1 to 4 and Comparative Examples 1 to 3, and a commercially available graphite negative electrode sheet (Shanshan G9). The lithium secondary batteries were charged at 25°C using a battery cycler under a 0.2 C-rate condition until the cell voltage reached 4.40 V, and subsequently discharged under the same 0.2 C-rate condition down to a cut-off voltage of 2.5 V, thereby measuring the initial charge-discharge capacity. The discharge capacity was converted into a specific capacity (mAh/g) based on the mass of the positive electrode active material, and the positive electrode utilization was calculated therefrom.

### (6) Capacity per Volume Evaluation

The capacity per volume of the rechargeable lithium battery cells manufactured in Examples 1 to 4 and Comparative Examples 1 to 3 was measured by multiplying density and capacity, and the results are shown in Table 3.

**Table 3:**

| | Pellet density (g/cc) | Average voltage (V) | 0.2C initial charge capacity (mAh/g) | 0.2C initial discharge capacity (mAh/g) | 0.2C efficiency (%) | Low temperature (-20°C) discharge capacity(m Ah/g) | 0.2C cycle-life (%, @50cy) | Positive electrode utilization rate (mAh/g) | Capacity per volume (mAh/cc) |
|---|---|---|---|---|---|---|---|---|---|
| Example 1 | 2.75 | 3.64 | 154.2 | 145.4 | 94.3 | 120 | 99.9 | 141.1 | 388 |
| Example 2 | 2.98 | 3.69 | 159.4 | 150.8 | 94.6 | 110 | 99.9 | 145.9 | 435 |
| Example 3 | 3.05 | 3.71 | 163.9 | 155.5 | 94.9 | 98 | 100 | 150 | 457 |
| Example 4 | 3.08 | 3.69 | 160.1 | 151.3 | 94.5 | 112 | 100 | 146.5 | 432 |
| Comparative Example 1 | 2.60 | 3.62 | 152.8 | 143.2 | 93.7 | 112 | 99.6 | 139.8 | 364 |
| Comparative Example 2 | 2.75 | 3.67 | 156.5 | 147 | 93.9 | 100 | 99.7 | 143.2 | 394 |
| Comparative Example 3 | 2.80 | 3.69 | 160.1 | 150.8 | 94.2 | 85 | 99.7 | 146.5 | 410 |

Referring to Table 3, the rechargeable lithium battery cells including the positive electrode active materials prepared in Examples 1 to 4 in the form of an assembly, when the first positive electrode active material and the second positive electrode active material have the same mixing weight ratio, have improved initial charge/discharge capacity and efficiency, have increased low-temperature discharge capacity, have improved average voltage, and have excellent powder characteristics, resulting in a significant increase in pellet density, a significant increase in a positive electrode utilization rate and a capacity per volume, and, particularly, excellent cycle-life characteristics, compared to the rechargeable lithium battery cells including the positive electrode active materials prepared in Comparative Examples 1 to 3 in the form of a simple mixture. For the rechargeable lithium battery cells including the positive electrode active material prepared in Comparative Examples 1 to 3, the first positive electrode active material and the second positive electrode active material were simply mixed, and an isolation phenomenon occurred between the particles due to insufficient electrochemical reactions between the different particles, which may result in a decrease in overall battery performance due to a physical connection problem between the different particles.

Meanwhile, the rechargeable lithium battery cell including the positive electrode active material of Example 4, which was further fired during the preparing process of the composite positive electrode active material of Example 2, exhibited improved overall battery performance compared to Example 2. By additionally firing the dried product during the assembly formation process to obtain a fired product and by using the fired product as a positive electrode active material, the bonding between the primary particles of the first positive electrode active material and the primary particles of the second positive electrode active material in the dried product is further strengthened, and the crystal structure is further stabilized, thereby further improving the electrochemical properties of the composite positive electrode active material.

While this invention has been described in connection with what is presently considered to be practical embodiments, the present disclosure is not limited to the above-described embodiments.

### <Description of Representative Reference Numerals>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |

| | | | |
|---|---|---|---|
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A composite positive electrode active material having a particle form, the composite positive electrode active material comprising:
a first positive electrode active material in a form of a plurality of primary particles comprising a lithium iron phosphate-based compound, the plurality of primary particles of the first positive electrode active material; and
a second positive electrode active material in a form of a plurality of primary particles comprising a lithium cobalt-based composite oxide, the plurality of primary particles of the second positive electrode active material.

2. The composite positive electrode active material as claimed in claim 1, wherein the lithium iron phosphate-based compound comprises a compound represented by Chemical Formula 1, a compound represented by Chemical Formula 2, or a combination thereof:
[Chemical Formula 1] Liₐ₁Fe₍₁₋ₓ₁₎M¹ₓ₁PO₄,
where 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof; and
[Chemical Formula 2] Liₐ₂Mnₓ₂Fe_{(1-x2-y2)}M²_{y2}PO₄,
where 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof.

3. The composite positive electrode active material as claimed in claim 1 or claim 2, wherein the lithium iron phosphate-based compound comprises Al, Mg, Ti, V, or a combination thereof in an amount from 0.1 mol% to 0.5 mol% based on a total metal of the lithium iron phosphate-based compound, excluding lithium.

4. The composite positive electrode active material as claimed in any one of claims 1 to 3, wherein an average particle diameter of the primary particles of the first positive electrode active material is greater than or equal to 0.1 µm and less than 2 µm,
wherein an arithmetic mean size of the primary particles of the first positive electrode active material is less than or equal to 200 nm, and
wherein a standard deviation of the arithmetic mean size of the primary particles of the first positive electrode active material is less than or equal to 100 nm.

5. The composite positive electrode active material as claimed in any one of claims 1 to 4, wherein the lithium cobalt-based composite oxide is represented by:
Liₐ₃Coₓ₃M³_{y3}O_{2-b3}X_{b3},
where0.9≤a3≤1.8, 0.7≤x3≤1, 0≤y3≤0.3, 0.9≤x3+y3≤1.1, and 0≤b3≤0.1, M³ is Al, B, Ba, Ca, Ce, Cr, Cu, Fe, Mg, Mn, Mo, Ni, Se, Si, Sn, Sr, Ti, V, W, Y, Zn, Zr, or a combination thereof, and X is F, P, S, or a combination thereof.

6. The composite positive electrode active material as claimed in any one of claims 1 to 5, wherein the lithium cobalt-based composite oxide is doped with aluminum, and
wherein an amount of aluminum in the lithium cobalt-based composite oxide is from 0.05 wt% to 1 wt% based on 100 wt% of the lithium cobalt-based composite oxide.

7. The composite positive electrode active material as claimed in any one of claims 1 to 6, wherein an average particle diameter of the primary particles of the second positive electrode active material is from 2 µm to 8 µm.

8. The composite positive electrode active material as claimed in any one of claims 1 to 7, wherein the second positive electrode active material further comprises a coating layer disposed on surfaces of the primary particles, the coating layer comprising aluminum or titanium.

9. The composite positive electrode active material as claimed in any one of claims 1 to 8, wherein the composite positive electrode active material has a particle form comprising a plurality of primary particles of the first positive electrode active material and a plurality of primary particles of the second positive electrode active material, and an average particle diameter of secondary particles of the composite positive electrode active material is from 3 µm to 20 µm.

10. The composite positive electrode active material as claimed in any one of claims 1 to 9, wherein the composite positive electrode active material comprises the first positive electrode active material in an amount from 50 wt% to 99 wt% based on 100 wt% of the composite positive electrode active material, and
wherein the composite positive electrode active material comprises the second positive electrode active material in an amount from 1 wt% to 50 wt% based on 100 wt% of the composite positive electrode active material.

11. The composite positive electrode active material as claimed in any one of claims 1 to 10, wherein a number of primary particles of the second positive electrode active material in particle of the composite positive electrode active material is 10 or less.

12. The composite positive electrode active material as claimed in any one of claims 1 to 11, wherein
(a) particles of the composite positive electrode active material comprise pores, and a porosity, represented by a ratio of an area occupied by the pores to a cross-sectional area of the particles of the composite positive electrode active material, is from 10% to 50%, and/or
(b) a pellet density of the composite positive electrode active material ranges from 2.6 g/cc to 3.4 g/cc.

13. A method of preparing the composite positive electrode active material as defined in any one of claims 1 to 12, the method comprising:
preparing a first positive electrode active material in a form of primary particles comprising a lithium iron phosphate-based compound;
mixing and wet milling the first positive electrode active material and a second positive electrode active material, having a form of primary particles and comprising a lithium cobalt-based composite oxide, to prepare a first slurry; and
adding the first slurry into a spray dryer and spray drying the first slurry to prepare a first dried product.

14. The method as claimed in claim 13, wherein, after preparing the first dried product, the method further comprises first firing the first dried product to prepare a first fired product.

15. A rechargeable lithium battery comprising:
a positive electrode comprising:
a positive electrode current collector; and
a positive electrode active material layer disposed on the positive electrode current collector and comprising the composite positive electrode active material as claimed in any one of claims 1 to 12;
a negative electrode; and
an electrolyte.
